# EUROPÄISCHE PATENTANMELDUNG

(11) **EP 3 130 216 A1**
(43) Veröffentlichungstag der Anmeldung: **15.02.2017**
(21) Anmeldenummer: 16182793.6
(22) Anmeldetag: 04.08.2016
(51) Int. Cl.: A01F 15/07, A01F 15/08, A01F 15/10

(54) **BALLENPRESSE UND LEITEINRICHTUNG**

(30) Priorität: 14.08.2015 DE 102015215575
(71) Anmelder: Deere & Company, Moline, IL 61265 (US)
(72) Erfinder: Chapon, Emmanuel, 70100 Velet (FR); Baker, Michael, Brimfield, SY84NL (GB); Guerin, Sebastien, 25000 Besancon (FR)
(74) Vertreter: Reichert, Christian

(57) **Zusammenfassung**

Es wird eine Ballenpresse (10), vorzugsweise eine landwirtschaftliche oder industrielle Presse zur Herstellung von Rundballen (44), mit einer Erntegutzufuhreinrichtung (24), einer Presskammer (28) und einem Zufuhrkanal (36), der einen der Presskammer (28) zugewandten Bereich (40) aufweist und durch den Erntegut von der Erntegutzufuhreinrichtung (24) zu dem Pressraum (28) gelangen kann, vorgeschlagen, wobei der der Presskammer (28) zuwandte Bereich (40) des Zufuhrkanals (36) eine Breite (B^{R}) aufweist, die geringer ausgebildet ist als die Breite (B^{P}) der Presskammer (28) als solche. Darüber hinaus wird eine Leiteinrichtung (42) zur Verringerung der Breite eines Zufuhrkanals (36) einer Ballenpresse (10), vorzugsweise einer landwirtschaftliche oder industriellen Presse zur Herstellung von Rundballen, vorgeschlagen.

## Beschreibung

Die vorliegende Erfindung betrifft eine Ballenpresse, vorzugsweise eine landwirtschaftliche oder industrielle Presse zur Herstellung von Rundballen, mit einer Erntegutzufuhreinrichtung, einer Presskammer und einem Zufuhrkanal, der einen der Presskammer zugewandten Bereich aufweist und durch den Erntegut von der Erntegutzufuhreinrichtung zu dem Pressraum gelangen kann, und eine Leiteinrichtung zur Verringerung der Breite eines Zufuhrkanals einer Ballenpresse, vorzugsweise einer landwirtschaftliche oder industrielle Presse zur Herstellung von Rundballen.

Bekannte Ballenpressen weisen eine Erntegutzufuhreinrichtung auf, die Material in der Art von Erntegut, Erntegutreste oder anderem vom Untergrund aufnimmt und durch einen Zufuhrkanal in einen Pressraum der Ballenpresse fördert. In dem Pressraum der Ballenpresse wird in geeigneter Weise ein Ballen gebildet, das heißt üblicherweise gepresst, im Anschluss an den Pressvorgang in geeigneter Weise fixiert, beispielsweise mit Garn umwickelt oder in ein geeignetes Material gehüllt, und im Anschluss von der Ballenpresse abgegeben oder ausgeworfen, um etwa auf dem Untergrund abgelegt oder in anderer Art und Weise weiter behandelt zu werden.

Derartige Ballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen. Es kann sich dabei um Pressen in Festkammerbauweise handeln, es ist aber auch ein teil- oder vollständig variabler Pressraum, insbesondere auch unter Einsatz von Pressriemen denkbar.

Der Zufuhrkanal bekannter Ballenpressen erstreckt sich üblicherweise über die gesamt Breite des Pressraums, so dass das Erntegut in einem breiten Strom in die Presskammer eingebracht wird. Insbesondere bei schwierigen Erntebedingungen, beispielsweise bei sehr trockenem Erntegut, kann es bei derartigen Pressen zu einer Erhöhung des Drucks in den Randbereichen des Pressraums, insbesondere zwischen Seitenwänden der Pressen und die Seitenflächen des Ballens kommen. Hierdurch können sich die Reibungskräfte zwischen den Seitenwänden der Presskammer und den Ballenseitenflächen derart erhöhen, dass eine Rotation des Ballens in der Presskammer verlangsamt wird und gegebenenfalls komplett zum Stillstand kommt. Hierdurch kann eine weitere oder vollständige Ballenbildung unmöglich gemacht und/oder ein Ballen minderer Qualität erzeugt werden.

Die der Erfindung zugrunde liegende Aufgabe wird darin gesehen, eine Ballenpresse bzw. eine Leiteinrichtung der eingangs genannten Art anzugeben, durch welche die vorgenannten Nachteile überwunden werden.

Die Aufgabe wird erfindungsgemäß durch die Lehre der Patentansprüche 1 bzw. 7 gelöst. Weitere vorteilhafte Ausgestaltungen und Weiterbildungen der Erfindung gehen aus den Unteransprüchen hervor.

Eine Ballenpresse, vorzugsweise eine landwirtschaftliche oder industrielle Presse zur Herstellung von Rundballen, weist eine Erntegutzufuhreinrichtung, eine Presskammer und einen Zufuhrkanal auf, der einen der Presskammer zugewandten Bereich aufweist und durch den Erntegut von der Erntegutzufuhreinrichtung zu dem Pressraum gelangen kann. Weist der der Presskammer zuwandte Bereich des Zufuhrkanals eine Breite auf, die geringer ausgebildet ist als die Breite der Presskammer als solche, so begünstigt dies die Ballenbildung auch bei schwierigen Erntebedingungen. Durch die Geometrie des Zufuhrkanals mit in Richtung der Presskammer reduzierter Breite bzw. verjüngtem Querschnitt wird der Gutstrom in Richtung eines zentraleren Bereichs des Zufuhrkanals bzw. der Presskammer geleitet, wodurch weniger Material in die Randbereiche der Presskammer gelangt. Der Druck in den Randbereichen kann so reduziert und die Reibung zwischen den Seitenwänden der Presskammer und den Ballenseitenwänden derart beeinflusst werden, dass geringere Reibungskräfte auftreten. Auf diese Weise kann einer Verlangsamung der Rotation des Ballens in der Presskammer und insbesondere einem vollständigen Blockieren vorgebeugt werden.

Nimmt die Breite des Zufuhrkanals in Richtung der Presskammer zumindest bereichsweise, vorzugsweise aber in dem der Presskammer zugewandten Bereich sukzessive ab, so unterstützt dies einen kontinuierlichen Gutfluss. Insbesondere kann Anhaftungen und eventuellen Blockierungen durch anhaftendes Material weiter vorgebeugt werden.

Es kann vorgesehen sein, dass der Zufuhrkanal als solcher bzw. entsprechende Wandungen des Zufuhrkanals, die gegebenenfalls auch durch Seitenwände der Ballenpresse gebildet oder mit diesen indirekt oder direkt verbunden sein können, eine zuvor beschriebene Geometrie aufweist bzw. aufweisen. Es kann aber beispielsweise aus fertigungstechnischen Gründen oder zur Erhöhung der flexiblen Anpassung der Ballenpresse beispielsweise an Umgebungs- oder Erntebedingungen wenigstens eine Leiteinrichtung vorgesehen sein, die die Breite des Zufuhrkanals reduziert und die vorzugsweise zumindest im Wesentlichen in dem der Presskammer zugewandten Bereich des Zufuhrkanals angeordnete ist.

Die Leiteinrichtung kann in dem Zufuhrkanal fest vorgesehen sein, beispielsweise indem sie mit wenigstens einer Seitenwand des Zufuhrkanals fest verbunden ist. Es ist aber auch denkbar, die Leiteinrichtung lösbar vorzusehen, um in einfacher Art und Weise eine flexible Anpassung der Ballenpresse an wechselnde Erntebedingungen zu ermöglichen.

Besonders einfach in Herstellung bzw. Montage ist es, wenn die Leiteinrichtung wenigstens ein Leitmittel, insbesondere eine Leitplatte bzw. ein Leitblech aufweist. Es ist dabei denkbar, nur ein Leitmittel vorzusehen. Besonders günstig ist es aber, wenn wenigstens zwei Leitmittel vorgesehen sind, die vorzugsweise mit Bezug auf eine Längsachse der Ballenpresse spiegelsymmetrisch ausgebildet sind.

Die Presse kann als Presse mit variablem oder auch teilvariablem Pressraum ausgebildet sein und/oder Pressriemen, Pressrollen oder anderer Pressmittel oder auch Kombinationen davon aufweisen. Vorzugsweise ist die Presse aber in der Art einer vorzugsweise Pressrollen aufweisenden Presse in Festkammerbauweise ausgebildet.

Eine Leiteinrichtung zur Verringerung der Breite eines Zufuhrkanals einer Ballenpresse mit den zuvor dargestellten Merkmalen kann vorzugsweise an einer landwirtschaftlichen oder industriellen Presse zur Herstellung von Rundballen vorgesehen sein. Eine derartige Leiteinrichtung kann beispielsweise als Ersatzteil oder auch zur Nachrüstung oder Umrüstung einer Ballenpresse Verwendung finden, um die beschriebenen Vorteile zu erzielen.

Die Leiteinrichtung kann in dem Zufuhrkanal fest vorgesehen sein. Ist sie aber lösbar, so vereinfacht dies eine Montage und/oder Demontage bzw. einen eventuellen Austausch, ein Nach- oder Umrüsten.

Besonders einfach in Herstellung bzw. Montage ist es, wenn die Leiteinrichtung wenigstens ein Leitmittel vorzugsweise in der Art einer Leitplatte bzw. eines Leitblechs aufweist. Es ist dabei denkbar, nur ein Leitmittel vorzusehen. Besonders günstig ist es aber, wenn wenigstens zwei Leitmittel vorgesehen sind, die vorzugsweise mit Bezug auf eine Längsachse der Ballenpresse spiegelsymmetrisch ausgebildet sind.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Ballenpresse in Seitenansicht mit einer in einem Zufuhrkanal angeordneten Leiteinrichtung,
- Fig. 2: eine schematische Frontalansicht der Presse mit leerer Presskammer und
- Fig. 3: eine Darstellung gemäß Figur 2, wobei in der Presskammer ein Ballen angedeutet ist.

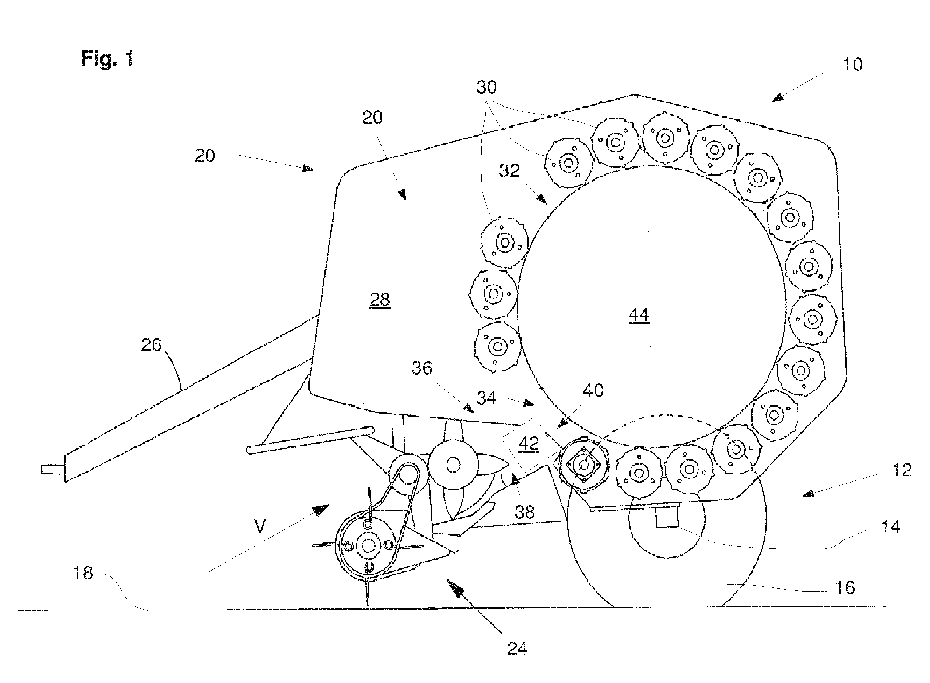

Figur 1 zeigt eine Ballenpresse 10 zur Erzeugung eines Presserzeugnisses in der Art eines Ballens 12.

Die gezeigte Ballenpresse 10 ist in der Art einer Rundballenpresse ausgebildet und kann sowohl im landwirtschaftlichen als auch im industriellen Bereich zur Herstellung eines üblicherweise als Rundballen bezeichneten, insbesondere rundzylindrischen Ballens 12 aus Erntegut , aber auch aus Müll, Papier, Stoff bzw. Gewebe, Baumwolle, Tabak etc. eingesetzt werden. Eine solche Ballenpresse 10 kann von einem nicht gezeigten Arbeitsfahrzeug, vorzugsweise in der Art eines Ackerschleppers, gezogen werden oder auch selbstfahrend ausgebildet sein.

Die Presse 10 weist ein Fahrgestell 12, welches sich über eine Achse 14 mit Rädern 16 auf dem Untergrund 18 abstützt, ein Gehäuse 20 mit Seitenwänden 22, eine Erntegutzufuhreinrichtung 24 und eine Deichsel 26, mittels der die Ballenpresse 10 an das nicht gezeigte Arbeitsfahrzeug angeschlossen werden kann, auf.

Innerhalb des Gehäuses 20 ist eine Presskammer 28 vorgesehen, die sich zwischen den beiden Seitenwänden 22 erstreckt und von einer Vielzahl von zumindest im Wesentlichen auf einem Kreis gelegenen Walzen 30 umgeben wird, wobei die Walzen 30, im vorderen Bereich der Ballenpresse 10 einen oberen Spalt 32 für eine nicht gezeigte Bindeeinrichtung und einen unteren Spalt 34 für die Erntegutzufuhreinrichtung 24 belassen.

Zwischen der Erntegutzufuhreinrichtung 24 und der Presskammer 28 erstreckt sich ein im Folgenden als Zufuhrkanal 36 bezeichneter Bereich, durch den Erntegut von der Erntegutzufuhreinrichtung 24 in die Presskammer 28 gelangt und der einen der Erntegutzufuhreinrichtung 24 zugewandten Bereich 38 und einen der Presskammer 28 zugewandten Endbereich 40 aufweist. In dem Zufuhrkanal 36 ist eine Leiteinrichtung 42 vorgesehen.

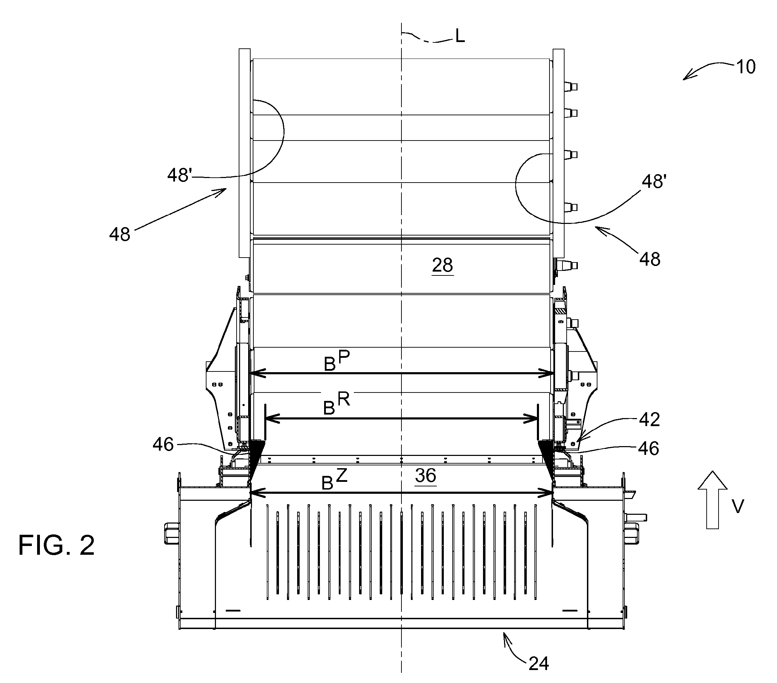

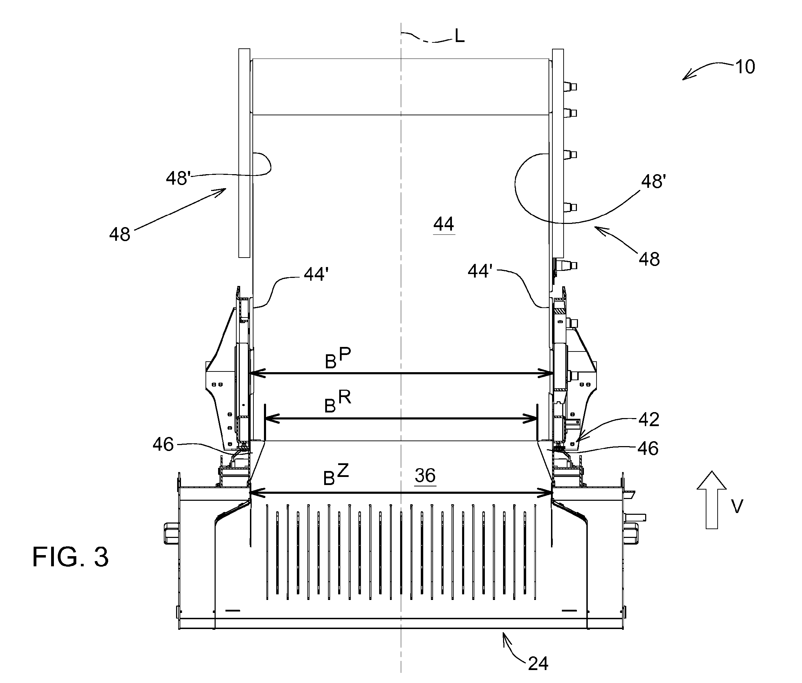

Es wird nun auch auch auf die Figuren 2 und 3 Bezug genommen, wobei Figur 2 eine Frontalansicht der Ballenpresse 10 mit leerer Presskammer 28 und Figur 3 eine Frontalansicht zeigt, bei der in der Presskammer 28 ein Ballen 44 angeordnet ist.

Allgemein weist der Zufuhrkanal 36 eine lichte Breite B auf. Aus den Figuren 2 und 3 ist aber ersichtlich, dass der Zufuhrkanal 36 in dem der Erntegutzufuhreinrichtung 24 zugewandten Bereich 38 eine erste Breite B^{Z} und in dem der Presskammer 28 zugewandten Bereich 40 eine zweite Breite B^{R} aufweist, wobei die Breite B^{R} des der Presskammer 28 zugewandten Bereichs des Zufuhrkanals 36 geringer vorgesehen ist als die Breite B^{Z} seines der Erntegutzufuhreinrichtung 24 zugewandten Bereichs 40.

Die Reduzierung der Breite B des Zufuhrkanals 36 wird mittels einer Leiteinrichtung 42 bewirkt, die zwei zu einer Längsachse L der Ballenpresse 10 spiegelsymmetrisch ausgebildete Leitmittel 46 aufweist. Gemäß dem vorliegenden Ausführungsbeispiel sind die Leitmittel 46 in der Art von an Seitenwänden 48 der Ballenpresse 10 vorgesehenen Leitplatten bzw. Leitblechen ausgebildet, die sich bezogen auf die Gutflussrichtung (siehe Pfeil V) im Normalbetrieb der Ballenpresse 10 von den Seitenwänden 48 mit sich vergrößerndem Abstand nach innen erstrecken und so den Zufuhrkanal 36 in Richtung der Presskammer 28 verjüngen bzw. seine lichte Breite B verringern.

Im Folgenden soll nun auf die Funktionsweise der Ballenpresse 10 im Normalbetrieb und hierbei insbesondere auf die Wirkungsweise der Leiteinrichtung 42 genauer eingegangen werden.

Im Normalbetrieb der Ballenpresse 10 wird durch die Erntegutzufuhreinrichtung 24 bereits geschnittenes und üblicherweise auf dem Untergrund liegendes, nicht dargestelltes Erntegut bzw. entsprechende Erntegutreste aufgenommen und entlang der mit V bezeichneten Gutflussrichtung in die Ballenpresse 10 eingebracht. Das Erntegut gelangt weiter durch den Zufuhrkanal 36 in die Presskammer 28, um dort zu einem Ballen 44 verdichtet und nach abgeschlossener Ballenbildung ausgeworfen zu werden.

Während des Vorgangs der Ballenbildung wird der Ballen 44 in der Presskammer 28 in Rotation versetzt, wodurch zwischen Ballenseitenflächen 44' und der Presskammer 28 zugewandten Seitenflächen 48' der Seitenwände 48 in Abhängigkeit vom Erntegut und/oder dessen Zustand eine mehr oder weniger starke Reibung auftreten kann.

Die Leiteinrichtung 42 bzw. insbesondere die Leitmittel 46 reduzieren die Breite des Zufuhrkanals 36 in Richtung der Presskammer 28 derart, dass der in die Presskammer 28 eintretende Gutstrom verjüngt bzw. bei Austritt aus dem Zufuhrkanal 36 eine bezogen auf den übrigen Zufuhrkanal 36 bzw. auf die Presskammer 28 reduzierte Breite aufweist. Es wird somit eine reduzierte Materialmenge in Richtung der Seitenwände 48 der Presskammer 28 gefördert, wodurch der Druck zwischen den nach innen gewandten Seitenflächen 48' der Seitenwände 48 und den Ballenseitenflächen 44' reduziert wird. Hierdurch wird die Reibung zwischen dem Ballen 44 und den Seitenwänden 48 bzw. zwischen den Ballenseitenwänden 44' und den Seitenflächen 48' der Seitenwände 48 verringert und so einem Blockieren des Ballens 44 in der Presskammer 28 vorgebeugt bzw. entgegengewirkt.

Die Leiteinrichtung 42 bzw. die Leitmittel 46 sind derart ausgebildet, dass sie die die Breite B des Zufuhrkanals 36 sukzessive und kontinuierlich reduziert bzw. reduzieren. Der Gutstrom wird durch die Leiteinrichtung 42 in der Gutstromrichtung V nach und nach zusammengeführt, so dass er mit reduzierter Breite B2 in die Presskammer 28 eintritt. Durch das allmähliche Reduzieren der Breite des Gutstroms wird einem Materialaufbau an der Leiteinrichtung 42 bzw. den Leitmitteln 46 entgegengewirkt und so einem Verstopfen des Zufuhrkanals 36 vorgebeugt.

## Patentansprüche

1. Ballenpresse (10), vorzugsweise eine landwirtschaftliche oder industrielle Presse zur Herstellung von Rundballen (44), mit einer Erntegutzufuhreinrichtung (24), einer Presskammer (28) und einem Zufuhrkanal (36), der einen der Presskammer (28) zugewandten Bereich (40) aufweist und durch den Erntegut von der Erntegutzufuhreinrichtung (24) zu dem Pressraum (28) gelangen kann, **dadurch gekennzeichnet, dass** der der Presskammer (28) zuwandte Bereich (40) des Zufuhrkanals (36) eine Breite (B^{R}) aufweist, die geringer ausgebildet ist als die Breite (B^{P}) der Presskammer (28) als solche.

2. Ballenpresse nach Anspruch 1, **dadurch gekennzeichnet, dass** die Breite des Zufuhrkanals (36) in Richtung der Presskammer (28) zumindest bereichsweise, vorzugsweise aber in dem der Presskammer (28) zugewandten Bereich (40) sukzessive abnimmt.

3. Ballenpresse nach Anspruch 1 oder 2, **gekennzeichnet durch** eine zumindest im Wesentlichen in dem der Presskammer (28) zugewandten Bereich (40) des Zufuhrkanals (36) angeordnete Leiteinrichtung (42), die die Breite (B^{Z}, B^{R}) des Zufuhrkanals (36) reduziert.

4. Ballenpresse nach Anspruch 3, **dadurch gekennzeichnet, dass** die Leiteinrichtung (42) in dem Zufuhrkanal (36) fest oder lösbar vorgesehen ist.

5. Ballenpresse nach Anspruch 3 oder 4, **dadurch gekennzeichnet, dass** die Leiteinrichtung (42) wenigstens ein Leitmittel (46), vorzugsweise in der Art einer Leitplatte bzw. eines Leitblechs aufweist, wobei vorzugsweise wenigstens zwei Leitmittel (46) vorgesehen sind, die vorzugsweise mit Bezug auf eine Längsachse (L) der Ballenpresse (10) spiegelsymmetrisch ausgebildet sind.

6. Ballenpresse nach einem der vorherigen Ansprüche, **dadurch gekennzeichnet, dass** die Ballenpresse (10) in der Art einer Festkammerpresse ausgebildet ist.

7. Leiteinrichtung (42) zur Verringerung der Breite eines Zufuhrkanals (36) einer Ballenpresse (10), vorzugsweise einer landwirtschaftliche oder industrieller Presse zur Herstellung von Rundballen, nach einem der einem der Ansprüche 1 bis 6.

8. Leiteinrichtung nach Anspruch 7, **dadurch gekennzeichnet, dass** die Leiteinrichtung (42) in dem Zufuhrkanals (36) fest oder lösbar vorgesehen ist.

9. Leiteinrichtung nach Anspruch 7 oder 8, **dadurch gekennzeichnet, dass** die Leiteinrichtung (42) wenigstens ein Leitmittel (46) vorzugsweise in der Art einer Leitplatte bzw. eines Leitblechs aufweist, wobei vorzugsweise zwei Leitmittel (46) vorgesehen sind, die vorzugsweise mit Bezug auf eine Längsachse (L) der Ballenpresse (10) spiegelsymmetrisch ausgebildet sind.
